Europäisches Patentamt

European Patent Office

Office européen des brevets

(11) Publication number: **0 170 418**
**B1**

## (12) EUROPEAN PATENT SPECIFICATION

(45) Date of publication of patent specification: **23.08.89**

(21) Application number: **85304656.3**

(22) Date of filing: **28.06.85**

(51) Int. Cl.⁴: **G 11 B 5/012**

(54) Magnetic recording and/or reproducing apparatus.

(30) Priority: **29.06.84 JP 134380/84**

(43) Date of publication of application:
**05.02.86 Bulletin 86/06**

(45) Publication of the grant of the patent:
**23.08.89 Bulletin 89/34**

(84) Designated Contracting States:
**DE FR GB NL**

(56) References cited:
**DE-A-2 808 374**
**DE-A-2 847 105**
**US-A-4 134 138**
**US-A-4 155 105**

(73) Proprietor: **KABUSHIKI KAISHA TOSHIBA
72, Horikawa-cho Saiwai-ku
Kawasaki-shi Kanagawa-ken 210 (JP)**

(72) Inventor: **Kunii, Shinpei
c/o Patent Division Kabushiki Kaisha Toshiba
1-1 Shibaura 1-chome Minato-ku Tokyo 105 (JP)**
Inventor: **Fujiki, Masao
c/o Patent Division Kabushiki Kaisha Toshiba
1-1 Shibaura 1-chome Minato-ku Tokyo 105 (JP)**

(74) Representative: **Freed, Arthur Woolf et al
MARKS & CLERK 57-60 Lincoln's Inn Fields
London WC2A 3LS (GB)**

Courier Press, Leamington Spa, England.

## Description

The present invention relates to a magnetic recording and/or reproducing apparatus.

Magnetic recording and/or reproducing apparatus for magnetic flexible (floppy) disks or magnetic diskettes (which will be called a "floppy" hereinafter) which have been used as external data storage devices for information equipment in the art are provided with a stop element called a "stopper" for mechanically preventing a magnetic head for data access to the disk from moving in a radially outer direction beyond a zero track (which is a radially outermost track within an available range of the disk.

For instance, a flexible disk controller (which will be called a "FDC" hereinafter) for controlling a flexible disk drive ("FDD") has an initial position of a magnetic head which is ordinarily set radially inside of the zero track. Accordingly, after powered on, an operation is conducted to allow the magnetic head to move radially outwards in response to a command prior to the initial data access, thereby to return the magnetic head to the position of the zero track.

The FDD which has received a command from the FDC operates as follows.

A control circuit (e.g. a micro processor) for controlling mechanical and, electrical systems for internal units assembled in the FDD becomes operative to move a carriage on which the magnetic head is mounted to the position of the zero track.

At this time, in the event that the initial position of the magnetic head is located radially outside of the zero track for any reason, the following phenomenon will occur.

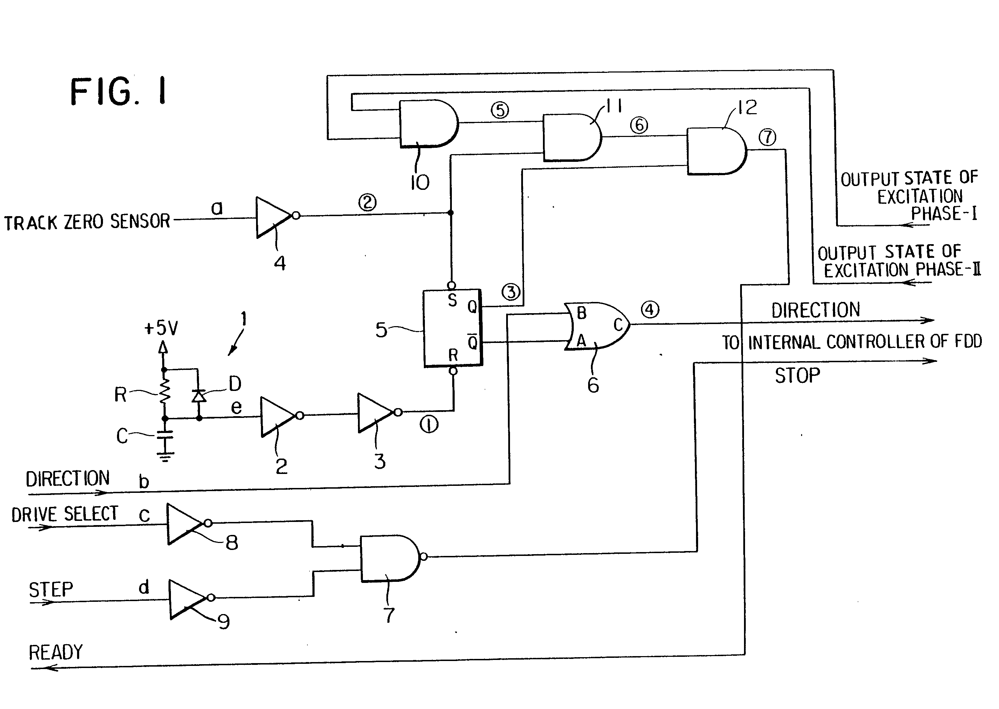

Namely, as shown in Fig. 4, since an output from the track zero position sensor and an excitation condition of the stepping motor in regard to the −4 track (which is a further radially outward track) are the same as those in regard to the zero track, internal controller erroneously judges the −4 track as the zero track, thus attempting to effect a control to move the magnetic head to the position of the −4 track.

There is a possibility that such an erroneous movement of the magnetic head allows the floppy disk drive to be out of order. For preventing this, conventional floppy disk drives are provided with the above-mentioned stopper in the vicinity of the minus two (−2) track which is located radially inside of the −4 track.

The provision of such a stopper can prevent the magnetic head from moving toward a track further radially outwardly positioned. Accordingly, by exciting the stepping motor at the time when the magnetic head has stopped to allow the excitation condition of the stepping motor to be in correspondence with that of the zero track (H.H condition in this embodiment), the magnetic head returns to the normal zero track position.

For this reason, the conventional floppy disk drive necessarily require the stopper for the purpose of returning the magnetic head to the zero track position in a stabilized manner.

Meanwhile, in recent years, there has been developed a system called an automatic return-to-zero system (which will be called an "ARTZ system" hereinafter), which system does not necessitate the provision of such a stopper as previously mentioned in view of reduction of manufacturing steps and the cost.

The returning operation of the magnetic head effected in accordance with this system will be described as follows. After power is on, initially an internal controller effecting a control of an internal mechanism provided in a flexible disk drive unit becomes operative to detect an output of a track zero position sensor. In the case where the magnetic head is positioned (as shown Fig. 4) at a radially inside track away from the zero track and the track zero position sensor has an output of high level, the internal controller becomes operative to move the magnetic head towards the radially outward direction to stop the movement of the magnetic head upon recognition of the position thereof on the basis of an output from the track zero position sensor and an excitation condition of the stepping motor.

On the other hand, in the case where the magnetic head is positioned at a track which is radially outside of the zero track (including a radially inside track extremely close to the zero track) and the track zero position sensor has an output of low level, the internal controller becomes operative to move the magnetic head in a radially inner direction until an output from the track position sensor shifts to high level, thereafter to move it in a radially outer direction to stop the movement of the magnetic head upon recognition of the position thereof on the basis of an output from the track zero position sensor and an excitation condition of a stepping motor in the same manner stated above.

Thus, in accordance with the above-mentioned ARTZ system, there is no possibility that the magnetic head attempts to return in a radially outer direction beyond the zero track regardless of the initial position of the magnetic head, with the result that there is no need for a provision of the stopper.

However, when floppy disk drive having the above-mentioned ARTZ function are applied to battery driven portable computers which are being recently developed, the following problem occurs.

Namely, when power is on, an internal controller provided in a floppy disk drive assembly independently becomes operative to return a magnetic head to the position of a zero track. For this reason, a current which is not under control of the system will flow in the floppy disk drive. When the system is powered on, there are instances where other devices (e.g. a printer device etc.) except for the floppy disk drive become operative. Accordingly, in the case where a current which is not under control of the system flows, there is the possibility that power consumption of the entire system exceeds an allowed power of a battery. In particular, when plural sets of disk drive are used, such a possibility increases.

For such reasons, since the disk drive assembly having ARTZ function cannot be employed in the battery driven portable computer, it has been necessary to employ the above-mentioned disk drive with the provision of a stopper.

Accordingly, a first object of the present invention is to provide a magnetic recording and/or reproducing apparatus, e.g. a magnetic flexible disk drive unit, especially for use in a battery driven portable computer, the magnetic recording and/or reproducing apparatus being configured so as to prevent a current which is not under control of the system from flowing when returning a magnetic head to the position of a zero track without using a stopper.

Further, a second object of the present invention is to provide a memory disk drive assembly wherein a power consumption of the entire system does not exceed an allowed power of the battery.

According to the invention, there is provided a magnetic recording and/or reproducing apparatus configured so as to allow a magnetic head to move on a zero track of a disk in accordance with a moving instruction for said magnetic head including a moving direction indication signal of said magnetic head from a controller, characterised by track position sensor means to output a track sense signal indicating whether said magnetic head is positioned radially inwardly of a predetermined position in the vicinity of said zero track or is positioned radially outwardly thereof, power on reset means operative to output an initial set signal at the time when power is on, first logic means responsive to said track sense signal and said initial set signal to output a first control signal of binary nature, second logic means adapted to input said direction indication signal and said first control signal, wherein when said first control signal represents a first logical state, said second logic means is operative to output a magnetic head direction control signal indicating the same direction as a direction indicated by said direction indication signal, while when said first control signal represents a second logical state, said second logic means is operative to output a magnetic head direction control signal indicating a predetermined direction irrespective of the direction indicated by said direction indication signal, third logic means for providing a drive control signal when selected by the controller, magnetic head moving means operative to move said magnetic head when provided with the drive control signal from the third logic means in a direction indicated by said magnetic head direction signal output from said second logic means.

The present invention will be described in detail in connection with a preferred embodiment shown in attached drawings, in which:

Fig. 1 is a circuit diagram illustrating an embodiment of a floppy disk drive circuit employed in the present invention,

Fig. 2 is a timing chart for the floppy disk drive circuit shown in Fig. 1,

Fig. 3 is a block diagram illustrating a control system of the floppy disk drive in the present invention, and

Fig. 4 is a graph showing signal output state of a track zero position sensor employed in the present invention.

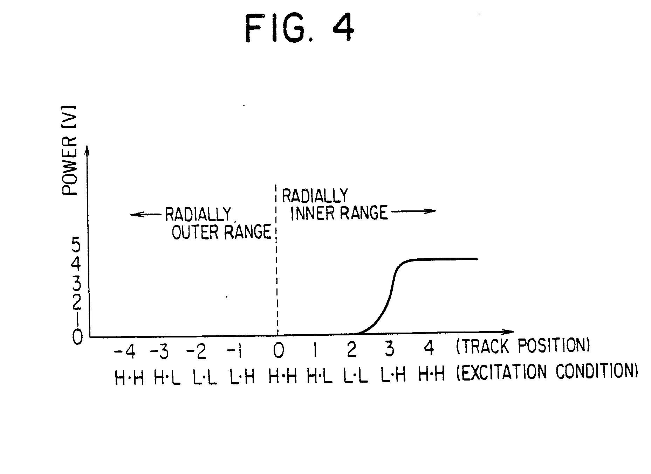

Initially, referring to Fig. 1, there is shown an embodiment of a flexible disk drive circuit employed in the present invention.

The flexible disk drive circuit comprises a power on reset circuit 1 comprising a resistor R having one end connected to a power supply terminal (+5 volts), a capacitor C connected between the other end of the resistor R and ground and a diode D connected in parallel with the resistor R, Schmitt trigger type inverters (NOT gates) 2, 3 and 4, (which will be simply called "inverters" hereinafter), a R—S flip-flop 5, and an OR gate 6.

An output of the power on reset circuit 1 is input to a reset input terminal R of the R—S flip-flop 5 through the inverters 2 and 3.

On the other hand, an output signal $a$ from a track zero position sensor (not shown) is input to the inverter 4. An output of the inverter 4 is input to a set input terminal S of the R—S flip-flop 5.

The operation of the R—S flip-flop 5 is as follows:

When the inverter 3 produces an output of low level and the inverter 4 produces an output of high level, the R—S flip-flop 5 is in a reset state to output a signal of high level from an output terminal $\overline{Q}$. Further, when the inverter 3 produces an output of high level and the inverter 4 produces an output of low level, the R—S flip-flop 5 is in a set state to output a signal of low level from the output terminal $\overline{Q}$. Furthermore, when both inverters 3 and 4 produce output of high level, the R—S flip-flop 5 is maintained at a previous state. In the reset state, i.e., when the output terminal $\overline{Q}$ has an output signal of high level, a signal of low level is produced from the output terminal $Q$, while in the set state, i.e., when the output terminal $\overline{Q}$ has an output signal of low level, a signal of high level is produced from the output terminal $Q$.

An output from the output terminal $\overline{Q}$ of the R—S flip-flop 5 is input to one input terminal A of the OR gate 6, and a direction signal $b$ fed from a FDC is input to the other input terminal B of the OR gate 6. The OR gate 6 has an output terminal C connected to magnetic head moving mechanism (not shown) through the internal controller. Thus, a signal for controlling movement of the magnetic head (which is labelled as the direction signal) is output from the output terminal C to the magnetic head moving mechanism. The flexible disk drive circuit further comprises a NAND gate 7 to which a drive select signal $c$ fed from the FDC through an inverter 8 and a step pulse signal $d$ fed from the FDC through an inverter 9 are input. The NAND gate 7 has an output terminal connected to the magnetic head moving mechanism through the internal controller to output a step pulse signal to a stepping motor provided in the magnetic head moving mechanism.

In this embodiment, the movement of the magnetic head is as follows: When the OR gate 6 produces a signal of high level as the direction signal from the output terminal C, the magnetic head moves radially outwardly of the disk in accordance with step pulse signal output from the NAND gate 7. In contrast, when the OR gate 6 produces a signal of low level as the direction signal from the output terminal C, the magnetic head moves radially inwardly of the disk in accordance with step pulse signal output from NAND gate 7.

The reason why inverters of Schmitt trigger type are used in this embodiment is that an erroneous operation due to noise or chattering can be reduced because of the large hysteresis effect and excellent wave-shaping effect of such inverters.

The disk drive circuit further comprises a ready signal output circuit comprising AND gates 10, 11 and 12, which is operative to produce a ready signal indicating that the magnetic head is positioned on the zero track.

The AND gate 10 has two input terminals for inputting two excitation conditions of the stepping motor, respectively, and has an output connected to one input terminal of the AND gate 11. An output from the inverter 4 is input to the other input terminal of the AND gate 11. An output from the AND gate 11 is input to one input terminal of the AND gate 12. Further, to the other input terminal of the AND gate 12, an output signal from the output terminal Q of the R—S flip-flop 5 is input, and from the output terminal of the AND gate 12, a ready signal indicating that the magnetic head is positioned on the zero track is output.

Accordingly, in this embodiment, only in the case where outputs of two excitation phases of the stepping motor represent high level, an output of the track zero position sensor represents low level, and the power on reset circuit produces an output of high level from the Q output terminal, is a ready signal is output from the ready signal output circuit.

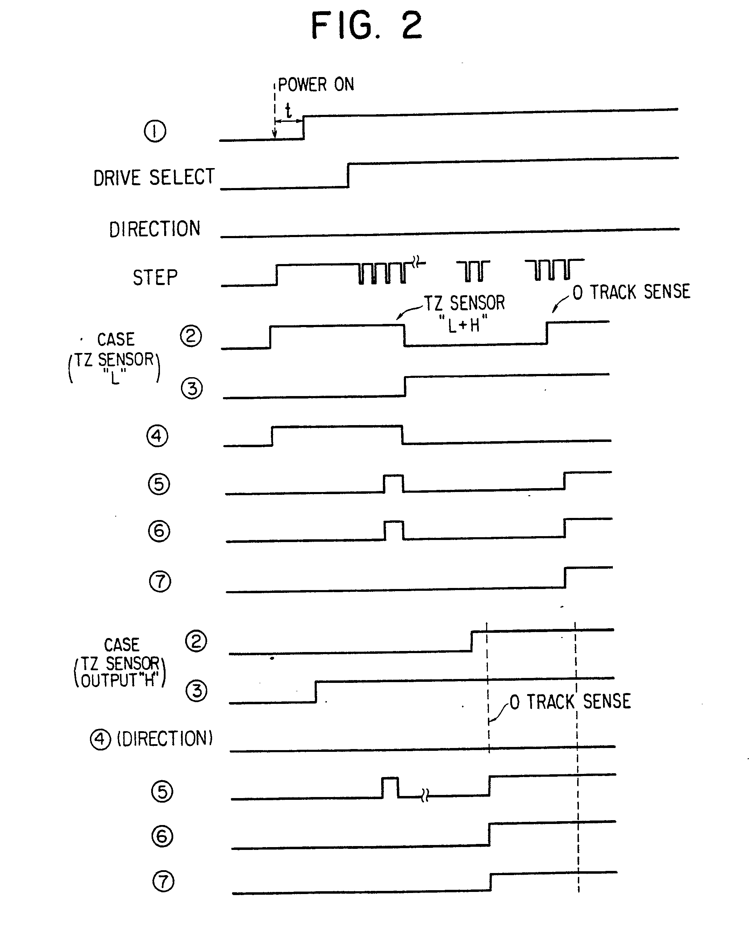

The operation of the circuit thus configured will be now described with reference to Fig. 2.

Initially, when the entire system is powered on, the power on reset circuit 1 outputs a signal e of which level gradually rises in accordance with a time constant T determined by the resistor R, the capacitor C and the diode D. Thus, when the output signal e from the power on reset circuit 1 is less than a threshold level, the inverter 2 outputs a signal of high level. On the other hand, when the output signal e exceeds the threshold level, the inverter 2 outputs a signal of low level.

Accordingly, for a time period t (a time period slightly shorter than the time period t in a strict sense) after power is on, an output of the inverter 3 represents low level, and then shifts to high level (symbol ① in Fig. 2). The R—S flip-flop 5 then shifts to reset state to output a signal of high level from the output terminal Q̄.

After power is on, the FDC attempts to return the magnetic head to the position of the zero track in accordance with an initial command. According to this, the FDC becomes operative to output the direction signal b, the drive select signal c and the step pulse signal d. At this time, the direction signal b represents low level. Further, when the drive select signal c and the step pulse d are in correspondence with each other in their logical states in the NAND gate 7, the step pulse signal d is fed to the stepping motor provided in the magnetic head moving mechanism. At this time, the above-mentioned floppy disk drive circuit effects two different kinds of operations depending upon the initial position of the magnetic head.

A first mode of operation (mode I) will be described wherein the magnetic head is positioned at a track which is radially outside of the zero track (including a radially inner track extremely close to the zero track). In this instance, since an output signal a from the track zero position sensor represents low level, the output of the inverter 4 shifts to high level (symbol ② in Fig. 2). Thus, the R—S flip-flop 5 is placed in the reset state to output a signal of high level from the output terminal Q̄ and a signal of low level from the output terminal Q in a manner similar to the case where power is initially on (symbol ③ in Fig. 2). Accordingly, the OR gate 6 becomes operative to output a signal of high level from the output terminal C regardless of the fact that the direction signal b input from the FDC represents high or low level (symbol ④ in Fig. 2). Thus, the magnetic head moves radially inwardly in accordance with the step pulse signal.

When the magneic head moves to the proximity of the plus three (3) track, the output signal a of the zero track sensor is above the threshold level. As a result, the output of the inverter 4 in turn shifts to low level. As previously mentioned, the R—S flip-flop 5 is maintained at reset state from the time when power is on. However, as a result of the fact that the output of the inverter 3 shifts to high level and the output of the inverter 4 shifts to low level (symbol ② in Fig. 2), the R—S flip-flop 5 is set to output a signal of low level from the output terminal Q̄, whereby the magnetic head moves outwardly in a radial direction.

Subsequently to this, the logical state of the R—S flip-flop 5 is unchanged. Accordingly, a signal of low level is continuously output from the output terminal Q̄. Thus, the OR gate 6 outputs a signal (indicating that the magnetic head moves outwardly in a radial direction) having the same logical state as that of the direction signal b from the output terminal c.

On the other hand, since the magnetic head passes through the zero track in the process of the radially inwardly movement (in the case where the magnetic head is located radially outwardly of the zero track), the AND circuits 10 and 11 produce signals of high level, respectively (symbols ⑤ and ⑥ in Fig. 2). However, since the output of the Q output terminal of the R—S flip-flop 5 represents low level, the AND circuit 12 produces an output signal of low level. As a result, the ready signal is not produced from the AND circuit 12. In this instance, only when the output signal a of the position zero sensor represents low level and the track zero position sensor senses the zero track at a stage where the magnetic head moves outwardly in a radial direction, does the AND gate 12 output the ready signal.

Thus, the internal controller becomes operative to successively deliver the step pulse signal d to the magnetic head driving mechanism until the output of the track zero position sensor and the excitation condition of the stepping motor are equal to those of the zero track, whereby the magnetic head moves in a radially outwardly direction to return to the zero track position.

Next, a second mode of operation (mode II) will be described wherein the magnetic head is positioned at a radially inner track away from the zero track. In this instance, since the output signal a of the track zero position sensor represents high level, the output of the inverter 4 represents low level, the R—S flip-flop 5 is set to output a signal of low level from the output terminal Q̄, and to output a signal of high level from the output terminal Q (symbol ③ in Fig. 2).

Subsequently to this, the output state of the R—S flip-flop 5 is unchanged. Accordingly, when the direction signal b fed from the FDC is input to the OR gate 6, the OR gate 6 outputs a signal (representing low level) having the same level as the logical level of the direction signal b. Accordingly, the internal controller becomes operative to continuously deliver step pulse signal d to the magnetic head moving mechanism until the output of the track zero sensor shifts to low level and the excitation condition of the pulse motor is equal to H.H phase, whereby the magnetic head moves radially outwardly to return to the zero track position.

During this returning operation, there is a possibility that the excitation condition of the stepping motor is coincident with that indicating the zero track. However, even if in-phase condition occurs, the ready signal is not output as long as the output of the track zero sensor represents high level, i.e., the ready signal outputs when the output of the track zero position sensor shifts to low level (symbols ⑥, ⑦ in Fig. 2).

In either mode of operation, after the magnetic head has returned to the zero track position, the FDC may desirably control moving direction of the magnetic head in accordance with the direction signal b.

In the above-mentioned embodiment of the invention, it has been described that the R—S flip-flop is used. However, the present invention is not limited to this configuration. The same function may be realized by using other logic circuits e.g. J—K flip-flop etc. Further, the OR gate 6 may be replaced by a NOR gate etc. combined with an inverter.

In addition, in the above-mentioned embodiment, the present invention has been embodied by using the hardware (logic circuitry). However, without limiting to this, the present invention may be configured by using firmware when a microcomputer is incorporated in the floppy disk drive.

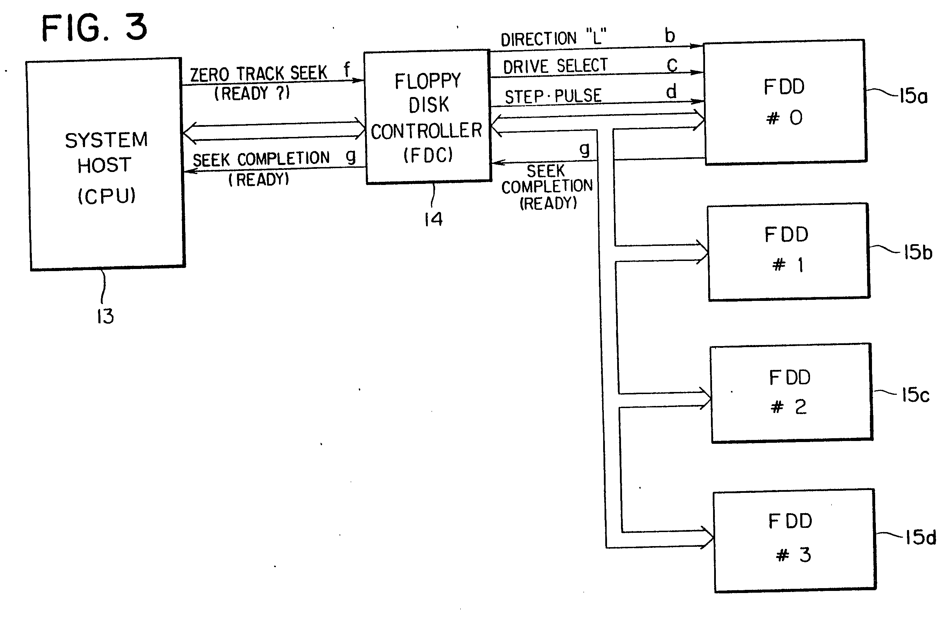

Fig. 3 illustrates a control system provided with a plurality of floppy disk drives each including the above-mentioned circuit.

When a command f for seeking the zero track is output from a CPU 13 to the FDC 14, the FDC 14 becomes operative to output a step pulse signal d only to one or ones selected from floppy disk drive 15a to 15d to effect seek operation only to the selected or designated one or ones among the plural disk drive units connected. After this seek operation is completed, each of the designated floppy disk drive outputs a seek completion signal g to the CPU 13 via the FDC 14.

The CPU 13 judges the ready condition on the basis of a ready signal indicating that the magnetic head is positioned at the track zero, a signal indicating that a spindle motor rotates at a constant speed, and a signal indicating that each of corresponding disk drive is correctly designated by the drive select signal c.

As described above, the floppy disk drive makes it possible to return the magnetic head to the position of the zero track without using a stopper mechanism regardless of the initial position of the magnetic head. Further, this operation is effected by only a device or devices selected by the FDC. Accordingly, even when applied to a floppy disk drive for use in a battery driven portable computer, there is no possibility that power dissipation of the entire system does not exceed an allowed power of the battery.

**Claims**

1. A magnetic recording and/or reproducing apparatus configured so as to allow a magnetic head to move on a zero track of a disk in accordance with a moving instruction for said magnetic head including a moving direction indication signal (b) of said magnetic head from a controller, characterised by

a) track position sensor means to output a track sense signal (a) indicating whether said magnetic head is positioned radially inwardly of a predetermined position in the vicinity of said zero track or is positioned radially outwardly thereof,

b) power on reset means (1) operative to output an initial set signal (e) at the time when power is on,

c) first logic means (5) responsive to said track sense signal (a) and said initial set signal (e) to output a first control signal of binary nature,

d) second logic means (6) adapted to input said direction indication signal (b) and said first control signal, wherein when said first control signal represents a first logical state, said second logic means (6) is operative to output a magnetic head direction control signal indicating the same direction as a direction indicated by said direction indication signal, while when said first control signal represents a second logical state, said second logic means is operative to output a magnetic head direction control signal indicating a predetermined direction irrespective of the direction indicated by said direction indication signal,

e) third logic means (7) for providing a drive control signal when selected by the controller,

f) magnetic head moving means operative to move said magnetic head when provided with the drive control signal from the third logic means in a direction indicated by said magnetic head direction signal output from said second logic means.

2. A magnetic recording and/or reproducing apparatus as set forth in claim 1, wherein said first logic means (5) comprises a R—S flip-flop.

3. A magnetic recording and/or reproducing apparatus as set forth in claim 1 or 2, wherein said second logic means (6) comprises of an OR circuit.

4. A magnetic recording and/or reproducing apparatus as claimed in any one of claims 1 to 3 wherein the third logic means (7) comprises a NAND circuit.

5. A magnetic recording and/or reproducing apparatus as set forth in any one of claims 1 to 3, wherein a power is supplied from a battery.

6. A magnetic recording and/or reproducing apparatus as set forth in any one of claims 1 to 4, wherein said apparatus is a floppy disk drive.

**Patentansprüche**

1. Gerät zur magnetischen Aufzeichnung und/ oder Wiedergabe mit einem Aufbau, der es einem Magnetkopf ermöglicht, sich auf einer Nullspur einer Platte entsprechend einer Bewegungsanweisung für den Magnetkopf zu bewegen, einschließlich eines Bewegungsrichtungsangabesignals (b) für den Magnetkopf von einem Controller, gekennzeichnet durch

a) eine Einrichtung zur Aufnahme der Spurposition, die ein Spuraufnahmesignal (a) ausgibt, das anzeigt, ob der Magnetkopf sich in radialer Richtung innerhalb einer vorgegebenen Position in der Nähe der Nullspur oder in radialer Richtung außerhalb derselben befindet,

b) eine Einschalt-Rücksetz-Einrichtung (1) zur Abgabe eines Anfangseinstellsignals (e) zum Zeitpunkt des Einschaltens,

c) eine erste logische Einrichtung (5), die auf das Spuraufnahmesignal (a) und das Anfangseinstellsignal (e) anspricht, zur Abgabe eines ersten Steuersignals binärer Natur,

d) eine zweite logische Einrichtung (6) zur Aufnahme des Bewegungsrichtungsangabesignals (b) und des ersten Steuersignals, worin, wenn das erste Steuersignal einen ersten logischen Zustand darstellt, die zweite logische Einrichtung (6) ein Magnetkopfrichtungssteuersignal ausgibt, das dieselbe Richtung angibt wie die durch das Bewegungsrichtungsangabesignal angegebene Richtung, während, wenn das erste Steuersignal einen zweiten logischen Zustand angibt, die zweite logische Einrichtung ein Magnetkopfrichtungssteuersignal ausgibt, das eine vorgegebene Richtung angibt, unabhängig von der vom Bewegungsrichtungsangabesignal angegebenen Richtung,

e) eine dritte logische Einrichtung (7), die ein Antriebssteuersignal liefert, wenn sie vom Controller angesprochen ist,

f) eine Magnetkopfbewegungseinrichtung, die den Magnetkopf bewegt, wenn sie mit dem Antriebssteuersignal von der dritten logischen Einrichtung in eine Richtung angesprochen ist, die vom Magnetkopfrichtungssignal, ausgegeben von der zweiten logischen Einrichtung, angegeben ist.

2. Gerät zur magnetischen Aufzeichnung und/ oder Wiedergabe nach Anspruch 1, worin die erste logische Einrichtung (5) einen R—S-Flip-Flop enthält.

3. Gerät zur magnetischen Aufzeichnung und/ oder Wiedergabe nach Anspruch 1 oder 2, worin die zweite logische Einrichtung (6) eine OR-Schaltung enthält.

4. Gerät zur magnetischen Aufzeichnung und/ oder Wiedergabe nach einem der Ansprüche 1 bis 3, worin die dritte logische Einrichtung (7) eine NAND-Schaltung aufweist.

5. Gerät zur magnetischen Aufzeichnung und/ oder Wiedergabe nach einem der Ansprüche 1 bis 3, worin der Strom von einer Batterie zur Verfügung gestellt wird.

6. Gerät zur magnetischen Aufzeichnung und/ oder Wiedergabe nach einem der Ansprüche 1 bis 4, worin das Gerät ein Diskettenlaufwerk ist.

**Revendications**

1. Appareil d'enregistrement et/ou de reproduction magnétique constitué pour permettre à une tête magnétique de se déplacer sur la piste zéro d'un disque en accord avec une instruction de déplacement de ladite tête magnétique comprenant un signal indicateur (b) du sens de déplacement de ladite tête magnétique en provenance d'un organe de commande, caractérisé par

a) des moyens détecteurs de piste de positionnement pour émettre un signal de détection de piste (a) indiquant si ladite tête magnétique est positionnée en direction radiale à l'intérieur d'une position prédéterminée au voisinage de ladite piste zéro ou est positionnée en direction radiale à l'extérieur de cette position,

b) des moyens de réglage (1) d'enclenchement agissant pour émettre un signal de réglage initial (e) au moment où le courant est branché,

c) des premiers moyens logiques (5) sensibles audit signal de détection de piste (a) et audit signal de réglage initial (e) pour émettre un premier signal de commande de nature binaire,

d) des deuxièmes moyens logiques (6) adaptés à recevoir ledit signal indicateur de sens (b) et ledit premier signal de commande de sorte que quand ledit premier signal de commande représente un premier état logique, lesdits deuxièmes moyens logiques (6) fonctionnent pour émettre un signal de commande de sens de tête magnétique indiquant le même sens que le sens indiqué par ledit signal indicateur de sens, tandis que quand ledit premier signal de commande représente un second état logique, lesdits deuxièmes moyens logiques fonctionnent pour émettre un signal de commande de sens de tête magnétique indiquant un sens prédéterminé indépendamment du sens indiqué par ledit signal indicateur de sens,

e) des troisièmes moyens logiques (7) pour fournir un signal de commande d'entraînement quand ils sont sélectionnés par l'organe de commande,

f) des moyens de déplacement de tête magnétique fonctionnant pour déplacer ladite tête magnétique quand ils reçoivent le signal de commande d'entraînement provenant des troisièmes moyens logiques, dans un sens indiqué par ledit signal de sens de tête magnétique émis par lesdits deuxièmes moyens logiques.

2. Appareil d'enregistrement et/ou de reproduction magnétique selon la revendication 1, dans lequel lesdits premiers moyens logiques (5) comportent une bascule RS.

3. Appareil d'enregistrement et/ou de reproduction magnétique selon la revendication 1 ou 2, dans lequel lesdits deuxièmes moyens logiques (6) comportent un circuit OU.

4. Appareil d'enregistrement et/ou de reproduction magnétique selon l'une quelconque des revendications 1 à 3, dans lequel les troisièmes moyens logiques (7) comportent un circuit NON-ET.

5. Appareil d'enregistrement et/ou de reproduction magnétique selon l'une quelconque des revendications 1 à 3, dans lequel le courant est fourni par une pile.

6. Appareil d'enregistrement et/ou de reproduction magnétique selon l'une quelconque des revendications 1 à 4, dans lequel ledit appareil est une commande de disque souple.

# FIG. 4

# FIG. 2

POWER ON

① 

DRIVE SELECT

DIRECTION

STEP

TZ SENSOR "L+H"

0 TRACK SENSE

CASE
(TZ SENSOR "L")  ②

③

④

⑤

⑥

⑦

CASE
(TZ SENSOR)
(OUTPUT "H")  ②

③

0 TRACK SENSE

④ (DIRECTION)

⑤

⑥

⑦

2

# FIG. 3

SYSTEM HOST (CPU) — 13

ZERO TRACK SEEK f
(READY ?)

SEEK COMPLETION g
(READY)

FLOPPY DISK CONTROLLER (FDC) — 14

DIRECTION "L" b
DRIVE SELECT c
STEP·PULSE d

g
SEEK COMPLETION (READY)

FDD # 0 — 15a

FDD # 1 — 15b

FDD # 2 — 15c

FDD # 3 — 15d

EP 0 170 418 B1

FIG. 1

TRACK ZERO SENSOR

OUTPUT STATE OF EXCITATION PHASE-I

OUTPUT STATE OF EXCITATION PHASE-II

DIRECTION

TO INTERNAL CONTROLLER OF FDD

STOP

+5V

DIRECTION

DRIVE SELECT

STEP

READY

EP 0 170 418 B1